Europäisches Patentamt

European Patent Office

Office européen des brevets

(11) Veröffentlichungsnummer : **0 134 956
B2**

(12) NEUE EUROPÄISCHE PATENTSCHRIFT

(45) Veröffentlichungstag der neuen Patentschrift :
23.11.89

(51) Int. Cl.⁴ : **C 08 G 63/60**

(21) Anmeldenummer : 84107690.4

(22) Anmeldetag : 03.07.84

(54) **Thermotrope aromatische Polyester mit hoher Steifigkeit und Zähigkeit, Verfahren zu ihrer Herstellung und ihre Verwendung zur Herstellung von Formkörpern, Filamenten, Fasern und Folien.**

(30) Priorität : 16.07.83 DE 3325703
26.05.84 DE 3419749

(43) Veröffentlichungstag der Anmeldung :
27.03.85 Patentblatt 85/13

(45) Bekanntmachung des Hinweises auf die Patenterteilung : 20.11.86 Patentblatt 86/47

(45) Bekanntmachung des Hinweises auf die Entscheidung
über den Einspruch : 23.11.89 Patentblatt 89/47

(84) Benannte Vertragsstaaten :
DE FR GB IT NL

(56) Entgegenhaltungen :
EP—A— 0 024 499
DE—A— 2 025 971
GB—A— 2 006 239
US—A— 4 349 659
Die Akte enthält technische Angaben, die nach dem
Eingang der Anmeldung eingereicht wurden und die
nicht in dieser Patentschrift enthalten sind.

(73) Patentinhaber : BAYER AG

D-5090 Leverkusen 1 Bayerwerk (DE)

(72) Erfinder : Dicke, Hans-Rudolf, Dr.
Bodelschwinghstrasse 16
D-4150 Krefeld (DE)
Erfinder : Schmidt, Manfred, Dr.
Bodelschwinghstrasse 20
D-4150 Krefeld (DE)
Erfinder : Freitag, Dieter, Dr.
Hasenheide 10
D-4150 Krefeld-Traar (DE)
Erfinder : El-Sayed, Aziz, Dr.
Saarlauternerstrasse 39
D-5090 Leverkusen (DE)

EP 0 134 956 B2

Jouve, 18, rue St-Denis, 75001 Paris, France

## Beschreibung

Die Erfindung betrifft hochmolekulare thermotrope voll-aromatische Polyester mit hoher Steifigkeit, Schlagzähigkeit und günstiger Schmelzviskosität, ein Verfahren zu ihrer Herstellung und ihre Verwendung zur Herstellung von Formkörpern, Filamenten, Fasern und Folien.

Als « thermotrop » bezeichnet man solche Substanzen, die flüssig-kristalline Schmelzen bilden. Thermotrope Polykondensate sind hinreichend bekannt, vergleiche z. B. F. E. McFarlane et al., Liquid Crystal Polymers II, Contemporary Topics in Polymer Science, Vol. 1, Plenum Publishing Corporation, 1977 ; W. J. Jackson und H. F. Kuhfuss, J. Polymer Science, Polymer Chem. Ed. 14, 2042 (1976) ; W. C. Wooten et al. in A. Ciferri « Ultra-high Modulus Polymers », Applied Science Publ., London 1979, S. 362 f. ; A. Blumstein et al., « Liquid Crystalline Order in Polymers », Academic Press, 1978 ; J. Preston, Angew. Makromol. Chem. 109/110, S. 1-19 (1982) ; A. Ciferri, W. R. Krigbaum, R. B. Meyer « Polymer Liquid Crystals », Academic Press, New York, 1982 ; EP 1185, 1340, 8855, 11 640, 15 856, 17 310, 18 145, 18 709, 22 344, 44 205, 49 615 ; US 3 991 013, 3 991 014, 4 066 620, 4 067 852, 4 083 829, 4 107 143 ; WO 79/797, 79/1034, 79/1040.

Der flüssig-kristalline Zustand von Polymerschmelzen lässt sich mit Hilfe eines Polarisationsmikroskops untersuchen : Für die Untersuchungen war das Okular mit einem Aufsatz ausgerüstet, der eine Fotodiode im Brennpunkt der Okularlinse angeordnet enthielt. Anhand eines nachgeschalteten Messverstärkers mit Regeleinrichtung wurde der Messwert am eingeschalteten Mikroskop bei parallel angeordneten Nicolschen Prismen in Abwesenheit einer Materialprobe auf 100 Skalenteile eingestellt. Bei gekreuzten Nicolschen Prismen ergab sich dann ein Wert von 0,01 Skalenteilen.

Die Schichtdicke der untersuchten Polykondensatschmelzen betrug 100 μm.

Die Untersuchung der Polykondensate erfolgte nach dem Aufschmelzen der Proben bei Temperaturen zwischen 280 und 400 °C. Sofern in diesem gesamten Bereich oder in einem Teil davon eine Aufhellung der zwischen den gekreuzten Nicolschen Prismen beobachteten Schmelze auftrat, wurde das Polykondensat als thermotrop flüssigkristallin eingestuft.

Die flüssig-kristallinen Polykondensate zeigen in der Messanordnung Werte über 1 Skalenteil, meist Werte von 3 bis 90 Skalenteilen. Für amorphe Schmelzen z. B. aromatische Polycarbonate, wurden dagegen Werte von weniger als 0,1 Skalenteil gefunden.

Die oben beschriebene Methode ist für eine Schnellbestimmung im Laboratorium besonders geeignet und liefert in nahezu allen Fällen zweifelsfreie Ergebnisse. In Zweifelsfällen kann es dagegen sinnvoll sein, das Vorhandensein flüssigkristalliner Komponenten mittels Röntgenweitwinkelstreuung in der Schmelze nachzuweisen, wie es z. B. bei G. W. Gray und P. A. Windsor, « Plastic Crystals, Physico-Chemical Properties and Methods of Investigation », insbesondere Chapter 3, John Wiley & Sons, New York, Sydney, Toronto 1974 beschrieben ist.

Die DE-OS 20 25 971 betrifft hochmolekulare voll-aromatische Polyester auf Basis von p Molen p-Hydroxybenzoesäure, q Molen aromatischen Dicarbonsäuren (wie Terephtal- oder Isophthalsäure) und r-Molen Diphenolen (wie Hydrochinon oder 4,4'-Dihydroxibiphenyl, wobei gilt : q : r = 10 : 15 bis 15 : 10, p : q = 1 : 100 bis : 1, p + q + r = 3 bis 600. Aufgrund der verwendeten Komponenten sind diese Polyester thermotrop ; sie können z. B. zu Fasern verarbeitet werden. Von den 13 Polyestern der Beispiele schmilzt ein einziger unter 300 °C. Diese Polyester sind also schlecht verarbeitbar.

Die US-PS 4 349 659 betrifft ein Verfahren zur Herstellung aromatischer Polyester aus aromatischer Dicarbonsäure, aromatischer Hydroxycarbonsäure und aromatischer Dihydroxyverbindung, die überwiegend aus 4,4'-Dihydroxydiphenyl besteht. Polyester auf Basis von p-Hydroxybenzoesäure, Iso- und ggf. Terephthalsäure, Hydrochinon und 3,4'- bzw. 4,4'-Dihydroxydiphenyl in den molaren Verhältnissen der erfindungsgemässen Ansprüche werden jedoch nicht offenbart.

Formkörper, die aus flüssig-kristalliner Schmelze hergestellt werden, weisen mechanische Festigkeiten auf, wie sie normalerweise bei unverstärkten, aus isotroper Schmelze verarbeiteten Polykondensaten nicht gefunden werden ; jedoch lässt die Zähigkeit solcher Formkörper manche Wünsche offen (vgl. US 42 42 496, EP 44 175, W. J. Jackson Jr., Brit. Polym. J. 12, 154 (1980). Durch eigene Untersuchungen wurde bestätigt, dass thermotrope Polyester hoher Festigkeit in der Regel geringe Zähigkeit und thermotrope Polyester hoher Zähigkeit in der Regel weniger ausgeprägte Festigkeit besitzen.

In der EP-A-24499 werden u. a. Polyester beschrieben (Beispiel 9), die aus Para-Hydroxybenzoesäure, Isophthalsäure, Hydrochinon und 4,4'-Dihydroxydiphenyl aufgebaut sind. Statt 4,4'-Dihydroxydiphenyl können als äquivalente Komponenten auch 3,4'-Dihydroxydiphenyl sowie die entsprechenden Ether eingebaut werden. Die beschriebenen Polyester weisen jedoch einen nicht befriedigenden Zug-E-Modul sowie eine nicht befriedigende Biegefestigkeit auf.

Aufgabe der Erfindung war es daher, thermotrope voll-aromatische Polyester bereitzustellen, die gegenüber den aus dem Stand der Technik bekannten Polyestern besser verarbeitbar sind und dennoch hervorragende mechanische Eigenschaften aufweisen.

Weitere Aufgabe der Erfindung war es, thermotrope voll-aromatische Polyester zur Verfügung zu stellen, die durch thermoplastische Verformung zu Formteilen verarbeitet werden können, welche sowohl hohe mechanische Festigkeit als auch hohe Zähigkeit besitzen.

Bevorzugte neue thermotrope voll-aromatische Polyester sollten einen Biege-E-Modul von mindestens 6 000, insbesondere von 8 500 und besser noch von mindestens 10 000 MPa besitzen.

Überaschenderweise wurde gefunden, dass voll-aromatische Polyester, die einkondensierte Reste von p-Hydroxybenzoesäure, Iso- und gegebenenfalls Terephthalsäure, Hydrochinon und 3,4'- und/oder 4,4'-Dihydroxydiphenyl, -diphenylether und/oder -diphenylsulfid enthalten, die gewünschte Kombination vorteilhafter Eigenschaften besitzen.

Gegenstand der Erfindung sind thermotrope voll-aromatische Polyester auf Basis von

(a) (gegebenenfalls substituierter) p-Hydroxybenzoesäure,

(b) Iso- und gegebenenfalls Terephthalsäure,

(c) Hydrochinon und

(d) 3,4'- und/oder 4,4'-Dihydroxydiphenyl, 3,4'- und/oder 4,4'-Dihydroxydiphenylether und/oder 3,4'- und/oder 4,4'-Dihydroxydiphenylsulfid,

wobei das Molverhältnis der einkondensierten Reste a/b 70 : 30 bis 55 : 45, insbesondere 65 : 35 bis 60 : 40, das Molverhältnis der einkondensierten Reste b/c/d 30 : 22 : 8 bis 45 : 41 : 4, insbesondere 35 : 28 : 6 bis 40 : 35 : 5, das Molverhältnis der einkondensierten Reste $b/(c + d) = 0,95$ bis 1,05 und der Terephthalsäureanteil der Komponente (b) bis zu 50 Mol-%, vorzugsweise 1 bis 40 Mol-%, insbesondere 10 bis 30 Mol-%, bezogen auf (b), betragen.

Bevorzugte (a) p-Hydroxybenzoesäuren sind durch $C_1$-$C_4$-Alkyl, $C_1$-$C_4$-Alkoxy, $C_6$-$C_{10}$-Aryl oder $C_7$-$C_{12}$-Alkylaryl (wie Phenyl, Tolyl, Naphthyl), oder Halogen (vorzugsweise Chlor) kernsubstituierte p-Hydroxybenzoesäuren, z. B. 4-Hydroxy-2-methylbenzoesäure, 4-Hydroxy-3-methylbenzoesäure, 2-Ethyl-4-hydroxybenzoesäure, 3-Ethyl-4-hydroxybenzoesäure, 4-Hydroxy-2-phenylbenzoesäure, 4-Hydroxy-3-phenylbenzoesäure oder 3-Chlor-4-hydroxybenzoesäure, vorzugsweise jedoch unsubstituierte p-Hydroxybenzoesäure selbst.

Die erfindungsgemässen Polyester können die Reste der Verbindungen (a) bis (d) in statistischer Verteilung, in Segmenten oder in Blöcken enthalten. Betreffend Komponente (a) ist darauf zu achten, dass längere Blöcke den Schmelzpunkt und die Schmelzviskosität stark erhöhen können.

Als Endgruppen können die erfindungsgemässen Polyester —COOH, —H, —OH, —$OC_6H_5$, Acyloxy oder von Kettenabbrechern herrührende Reste enthalten. Bevorzugte Kettenabbrecher sind monofunktionelle aromatische Hydroxylverbindungen, wie 4-Hydroxydiphenyl, p-Nonylphenol, 4-(1,1,3,3-Tetramethylbutyl)-phenol, β-Naphtol, und aromatische Monocarbonsäuren, wie Diphenylcarbonsäuren und Naphthalincarbonsäuren. Kettenabbrecher können in Mengen von 0,5 bis 5 Mol-%, bezogen auf die Summe der Komponenten a und b, eingesetzt werden.

Gegebenenfalls können auch verzweigende drei- oder höherfunktionelle — vorzugsweise aromatische — Monomere in Mengen von 0,1 bis 1 Mol-%, bezogen auf die Summe der Komponenten a und b, z. B. Phloroglucin, 1,3,5-Benzoltricarbonsäure und 3,5-Dihydroxybenzoesäure, eingesetzt werden.

Die erfindungsgemässen Polyester besitzen in der Regel eine inhärente Viskosität von mindestens 0,5, vorzugsweise von mindestens 1,0, dl/g (gemessen an einer Lösung von 5 mg Polyester/ml p-Chlorphenol bei 45 °C). Sollten Polyester in p-Chlorphenol unlöslich sein, wird angenommen, dass sie die angegebene Mindestviskosität besitzen ; sie sind somit erfindungsgemäss, sofern sie den Parametern des Hauptanspruchs genügen.

Die erfindungsgemässen Polyester besitzen vorzugsweise eine Schmelzviskosität von weniger als 1 000 Pa·s, gemessen bei einer Schergeschwindigkeit von $10^3$ $sec^{-1}$ unter Verwendung einer Düse mit einem Länge/Durchmesserverhältnis von 20 bei einer Temperatur von weniger als 370 °C, vorzugsweise weniger als 330 °C.

Die erfindungsgemässen Polyester können nach verschiedenen Verfahren hergestellt werden, z. B. durch Kondensation bzw. Umesterung der reaktiven Derivate der Verbindungen (a) bis (d) z. B. ihrer Ester bzw. Säurechloride, und anschliessende Polykondensation.

Beispiele für bevorzugte Ausgangsverbindungen sind also ihre Arylester, ihre Acylester und ihre Säurechloride.

Nach einem bevorzugten Syntheseverfahren werden die niederen Acylester, vorzugsweise die Acetate, der Verbindungen (a), (c) und (d) mit Iso- und gegebenenfalls Terephthalsäure (b) umgesetzt, wobei die Acylester auch in situ hergestellt werden können.

Diese Reaktionen können in der Schmelzphase durchgeführt werden ; möglich ist jedoch auch die Reaktion in Gegenwart eines flüssigen wärme-überleitenden Mediums, das einen hohen Siedepunkt hat.

Die Reste der Verbindungen (a) bis (d) werden im Verhältnis der Ausgangskomponenten in den Polyester eingebaut.

Die erfindungsgemässen Polyester sind vorzugsweise frei von Carbonatgruppen.

Es kann zweckmässig sein, sowohl die Kondensations- bzw. Umesterungsreaktionen als auch die Polykondensationsreaktionen katalytisch zu beschleunigen. Derartige Katalysatoren sind bekanntlich z.B. Lewis-Säuren und Halogenwasserstoffsäuren ; Oxide, Hybride, Hydroxide, Halogenide, Alkoholate, Phenolate, Salze anorganischer oder organischer Säuren (vorzugsweise Carbonsäuresalze), Komplexsalze oder Mischsalze der Erdalkalimetalle, z. B. Magnesium, Calcium ; der Nebengruppenelemente, z. B. Vanadium, Titan, Mangan, Cobalt, Nickel, Zink, Lanthan, Cer, Zirkonium oder der Elemente aus anderen Gruppen des Periodensystems, z. B. Germanium, Zinn, Blei und Antimon oder auch die Alkalimetalle oder

3

Erdalkalimetalle selbst, insbesondere Natrium, Natriumhydroxid, Lithiumacetat, Natriumacetat, Kaliumacetat, Calciumacetat, Magnesiumacetat, Cobaltacetat, Zinkacetat, Calciumbenzoat, Magnesiumacetylacetonat, Zinkacetylacetonat, Vanadyl-$C_1$-$C_8$-alkoxide, Titanalkoxide wie Titantetrabutylat, Titantetrapropylat, Alkoxytitansilikate, Zirkoniumbutylat, Zirkoniumpropylat, Titantetraphenolat, Natriumphenolat, Germaniumdioxid Antimontrioxid, Dialkyl- und Diarylzinnoxid, Di-butyl-zinndiacetat, Di-butyl-dimethoxyzinn. Besonders bevorzugt sind Magnesium-, Mangan-, Natrium-, Kalium- und Zinkacetat.

Die Katalysatormengen betragen vorzugsweise 0,001 bis 1, insbesondere 0,01 bis 0,2, Gew.-%, bezogen auf das Gesamtgewicht der eingesetzten Monomeren.

Die erfindungsgemässen Polyester werden bei Temperaturen von 160 bis 370 °C hergestellt, wobei man im allgemeinen die Reaktion bei niedrigen Temperaturen beginnt und im Verlaufe der Reaktionsfortschreitung kontinuierlich die Temperatur erhöht. Bei nachlassender Reaktionsgeschwindigkeit kann ein Vakuum angelegt werden, wobei der Druck vorzugsweise kontinuierlich von Normaldruck bis ca. 0,1 mbar gesenkt wird.

Das erhaltene Produkt kann — vorzugsweise in Granulatform — einer Festphasennachkondensation unter vermindertem Druck bei Temperaturen von 220 bis 300 °C unterworfen werden; nach 1 bis 25 Studen haben sich das Molekulargewicht erhöht und die daraus resultierenden Eigenschaften des Polyesters merklich verbessert.

Weiterer Gegenstand der Erfindung ist also ein Verfahren zur Herstellung der neuen Polyester durch Umsetzung der Komponenten (a) bis (d) bzw. ihrer reaktionsfähigen Derivate, die auch in situ hergestellt werden können, gegebenenfalls in Gegenwart von Kettenabbrechern, Verzweigungsmitteln und Katalysatoren, bei Temperaturen von 160 bis 370 °C, gegebenenfalls unter vermindertem Druck.

Die erfindungsgemässen thermotropen Polyester können infolge ihrer relativ geringen Schmelzviskosität vorteilhaft aus der Schmelze zu Spritzgussformteilen, Filamenten, Fasern, Bändern und Filmen verarbeitet werden, wobei durch auftretende Scherkräfte eine Moleküorientierung erzielt wird, die in hohem Masse von der Stärke der Scherkräfte beeinflusst wird. Desweiteren zeigen sie eine ausgeprägte Strukturviskosität, das heisst, dass die Schmelzviskosität bei Erhöhung der Scherkräfte stark abfällt. Geeignete Verarbeitungsverfahren sind Spritzguss, Extrusion, Pressen und Schmelzspinnen.

Aus den erfindungsgemässen Polyestern können Formteile hoher Zugfestigkeit, ausserordentlicher Zähigkeit und grosser Dimensionsstabilität hergestellt werden. Da die Polyester ausserordentlich chemikalienresistent und flammwidrig sind, eignen sie sich bevorzugt zur Herstellung von

— elektrotechnischen Artikeln, z. B. Isolatoren, gedruckten Schaltungen, Steckkontakten, Armaturenteilen,

— Teilen chemisch-technischer Apparate, z. B. Rohren, Behälterauskleidungen, Rotoren, Gleitlagern, Dichtungen,

— Teilen der Flugzeuginnenausstattung,

— Teilen medizinisch-technischer Geräte, z. B. Bauteilen von Klimaanlagen, Ventilteilen.

Die erfindungsgemässen Polyester können aber auch als Überzugs- und Beschichtungsmaterial (pulverförmig oder dispergiert) verwendet werden. Auch zur Herstellung verstärkter oder gefüllter Formmassen mit einem Verstärker- bzw. Füllstoffgehalt von 5 bis 65 Gew.-%, bezogen auf verstärkte bzw. gefüllte Formmase, sind sie bestens geeignet.

Weiterer Gegenstand der Erfindung ist also die Verwendung der neuen Polyester zur Herstellung von Formkörpern, Filamenten, Fasern und Filmen.

## Beispiele

Die Prüfung der Schlagzähigkeit $a_n$ und Kerbschlagzähigkeit $a_k$ erfolgte an Normkleinstäben gemäss DIN 53 453 (ISO/R 179) bei 23 °C jeweils an 10 Prüfkörpern. Die Bestimmung der Biegefestigkeit wurde an Normkleinstäben gemäss DIN 53 452 (ISO/R 178) durchgeführt. Der Biege-E-Modul wurde gemäss DIN 53 457 ermittelt. Die Zugfestigkeit wurde gemäss DIN 53 455 (ISO/R 527), der Zug-E-Modul gemäss DIN 53 457 gemessen. Die Messung der Wärmformbeständigkeit erfolgte durch Bestimmungen der Vicat-B-Erweichungstemperatur gemäss DIN 53 460 (ISO 306).

## Vergleich 1

In ein 1 l-Planschliffgefäss mit Planschliffdekkel, Rührer, Stickstoffeinleitung und einem Destillationsaufsatz, der mit einem Kühler verbunden war, wurden die folgenden Substanzen eingewogen:

2,4 Mol ≙ 331,49 g p-Hydroxybenzoesäure,

1,44 Mol ≙ 239,23 g Isophthalsäure,

1,44 Mol ≙ 158,56 g Hydrochinon,

6,33 Mol ≙ 646,23 g Acetanhydrid,

0,1 g Magnesiumacetat (wasserfrei) und

0,15 g Antimontrioxid.

Unter Stickstoffatmosphäre wurde mittels Salzbad auf 170 °C erhitzt. Sobald die Destillation von Essigsäure nachliess (nach ca. 45 Minuten), wurde die Temperatur im Reaktionsgefäss im Verlauf einer Stunde auf 250 °C und im Verlauf einer weiteren Stunde auf 330 °C erhöht. Nach Beendigung der Destillation wurde der Druck im Verlauf von 30 Minuten bis auf ca. 1 mbar gesenkt.

Während dieser Vakuumphase nahm die Viskosität der entstandenen Polymerschmelze stark zu. Die Schmelze wurde daher langsamer gerührt.

Am Ende dieser Phase war eine Gesamtmenge von 709 g Essigsäure (enthält restliches Acetanhydrid) aufgefangen worden.

Der erhaltene hell-braune Polyester wurde gemahlen und bei 250 °C einer Festphasennachkondensation unterworfen (bei einem Vakuum von ca. 1 mbar/24 Stunden). Die inhärende Viskosität des so erhaltenen Polyesters betrug 1,2 dl/g. Im Bereich von 300 °C bis 400 °C wurde eine optisch anisotrope Schmelzphase beobachtet.

## Vergleich 2

In das in Vergleich 1 beschriebene Reaktionsgefäss wurden die folgenden Substanzen eingefüllt :

2,4 Mol ≙ 331,49 g p-Hydroxybenzoesäure,
1,44 Mol ≙ 239,23 g Terephthalsäure,
1,2 Mol ≙ 132,13 g Hydrochinon,
0,24 Mol ≙ 48,48 g 4,4'-Dihydroxydiphenylether,
6,33 Mol ≙ 646,23 g Acetanhydrid,
0,1 g Magnesiumacetat und
0,15 g Antimontrioxid.

Das in Vergleich 1 beschriebene Temperatur-Zeit-Programm wurde befolgt. Vor Erreichen des Endvakuums wurde der Inhalt des Reaktionsgefässes fest (Salzbadtemperatur : 350 °C). Das Produkt konnte nur durch Zertrümmern des Glasgefässes isoliert werden. Es war in allen gebräuchlichen organischen Lösungsmitteln unlöslich. Es wurde keine anisotrope Schmelzphase beobachtet.

## Beispiel 1

In die in Vergleich 1 beschriebene Reaktionsapparatur wurden die folgenden Substanzen eingefüllt :

2,4 Mol ≙ 331,49 g p-Hydroxybenzoesäure,
1,44 Mol ≙ 239,23 g Isophthalsäure,
1,2 Mol ≙ 132,13 g Hydrochinon,
0,24 Mol ≙ 48,48 g 4,4'-Dihydroxydiphenylether,
6,33 Mol ≙ 646,23 g Acetanhydrid,
0,1 g Magnesiumacetat und,
0,1 g Antimontrioxid.

Nach dem in Vergleich 1 angegebenen Temperatur-Zeit-Programm wurde ein hellbeiger Polyester erhalten, der gemahlen und in fester Phase bei 250 °C nachkondensiert wurde (24 Stunden bei einem Vakuum von ca. 1 mbar).

Die inhärente Viskosität des so erhaltenen Polyesters betrug 1,43 dl/g. Im Bereich von 300 °C bis 400 °C wurde eine optisch anisotrope Schmelzphase beobachtet.

## Beispiele 2-5

In der in Vergleich 1 beschriebenen Reaktionsapparatur und nach dem dort beschriebenen Verfahren wurden weitere Polyester hergestellt. Art und Menge der Ausgangsprodukte sind in Tabelle 1 aufgelistet.

Tabelle 1

| Beispiel | PHB (Mol) | b (Mol) | c (Mol) | d (Mol) | Komponente d | Inhärente Viskosität (dl/g) |
|---|---|---|---|---|---|---|
| 2 | 2,4 | 1,44 | 1,2 | 0,24 | 4,4'-DOD | 2,09 |
| 3 | 2,4 | 1,44 | 1,2 | 0,24 | 4,4'-DODS | 1,45 |
| 4 | 2,8 | 1,2 | 0,9 | 0,3 | 4,4'-DODE | 1,53 |
| 5 | 2,4 | 1,2 | 1,0 | 0,2 | 3,4'-DODE | 1,42 |

PHB = p-Hydroxybenzoesäure
DOD = Dihydroxydiphenyl
DODE = Dihydroxydiphenylether
DODS = Dihydroxydiphenylsulfid

Zur Prüfung der mechanischen Eigenschaften wurden aus den Polyestern des Vergleichs 1 und der Beispiele 1 bis 5 durch Spritzguss Normkleinstäbe hergestellt. Der Polyester aus Vergleich 2 konnte nicht unzersetzt verarbeitet werden.

Die Verarbeitung der Polyester erfolgte bei Temperaturen zwischen 300 und 330 °C. In Tabelle 2 sind die gemessenen Werte aufgeführt.

Beispiel 6

In die im Vergleich 1 beschriebene Reaktionsapparatur wurden die folgenden Substanzen eingewogen :

2,4 Mol ≙ 331,49 g p-Hydroxybenzoesäure,
1,2 Mol ≙ 199,36 g Isophthalsäure,
0,24 Mol ≙ 33,87 g Terephthalsäure,
1,2 Mol ≙ 132,13 g Hydrochinon,
0,24 Mol ≙ 44,64 g 4,4'-Dihydroxydiphenyl,
6,33 Mol ≙ 646,23 g Acetanhydrid,
0,2 g Magnesiumacetat unde,
0,2 g Germaniumdioxid.

Nach dem in Vergleich 1 beschriebenen Temperatur-Zeit-Programm wurde ein hellbeiges Produkt mit guter Schmelzfliessfähigkeit erhalten. Das Produkt wurde gemahlen und im Vakuum (ca. 1 mbar) in fester Phase nachkondensiert (24 Stunden).

Die inhärente Viskosität des Polyesters betrug 2,8 dl/g. Im Bereich von 290 bis 400 °C wurde ein optisch anisotrope Schmelzphase beobachtet.

Tabelle 2

| Beispiel | Vicat B (°C) | $a_n/a_k$ (kJ/m²) | Biegefestig-keit (MPa) | Biege-E-Modul (MPa) | Viskosität+ (Pa . s) |
|---|---|---|---|---|---|
| Vergleich 1 | 140 | 8/6 | 150 | 6.500 | 800/300 °C |
| Bsp. 1 | 130 | 42×/27× | 160 | 6.100 | 460/280 °C |
| 2 | 141 | 49×/37× | 150 | 6.950 | 270/300 °C |
| 3 | 148 | 45×/29× | 154 | 7.300 | 150/310 °C |
| 4 | 130 | 72×/62× | 155 | 6.150 | 200/300 °C |
| 5 | 134 | 48×/41× | 140 | 7.150 | 490/300 °C |

x = angebrochen

+ = Schmelzviskosität bei einer Schergeschwindigkeit von $10^3$ sec$^{-1}$ und bei der jeweils angegebenen Temperatur

Beispiele 7-13

Zur Herstellung der in Tabelle 3 aufgelisteten Polyester wurde die im Vergleich 1 beschriebene Reaktionsapparatur und das dort beschriebene Verfahren verwendet.

Tabelle 3

| Beispiel | PHB (Mol) | (b) (Mol) | (c) (Mol) | (d) (Mol) | Komponente d | Inhärente Viskosität (dl/g) | Anisotrope Phase |
|---|---|---|---|---|---|---|---|
| 7 | 2,6 | 1,2 IS 0,2 TS | 1,2 | 0,2 | 4,4'-DOD | 2,82 | 270° C-400 °C |
| 8 | 2,8 | 1,1 IS 0,2 TS | 1,1 | 0,2 | 4,4'-DOD | 2,54 | 300 °C-400 °C |
| 9 | 2,94 | 1,06 IS 0,2 TS | 1,05 | 0,21 | 4,4'-DOD | 2,3 | 290 °C-400 °C |
| 10 | 2,94 | 0,96 IS 0,3 TS | 1,05 | 0,21 | 4,4'-DOD | 3,14 | 300 °C-400 °C |
| 11 | 2,8 | 1,0 IS 0,3 TS | 1,1 | 0,2 | 4,4'-DOD | 1,9 | 280 °C-400 °C |

Tabelle 3 (Fortsetzung)

| Beispiel | PHB (Mol) | (b) (Mol) | (c) (Mol) | (d) (Mol) | Komponente d | Inhärente Viskosität (dl/g) | Anisotrope Phase |
|---|---|---|---|---|---|---|---|
| 12 | 2,6 | 1,2 IS  0,2 TS | 1,2 | 0,2 | 4,4'-DODE | 1,98 | 260 °C-400 °C |
| 13 | 2,6 | 1,2 IS  0,2 TS | 1,2 | 0,2 | 4,4'-DODS | 2,94 | 310 °C-400 °C |

PHB = p-Hydroxybenzoesäure
DOD = Dihydroxydiphenyl
IS = Isophthalsäure
TS = Terephthalsäure
DODE = Dihydroxydiphenylether
DODS = Dihydroxydiphenylsulfid

Zur Prüfung der mechanischen Eigenschaften wurden aus dem Polyester des Vergleichs 1 und der Beispiele 6 bis 13 durch Spritzguss Normkleinstäbe hergestellt. Die Verarbeitung der Polyester erfolgte bei Temperaturen zwischen 290 und 330 °C. In Tabelle 4 sind die gemessenen Werte aufgeführt.

Beispiel 14

In einen beheizbaren 25 l-Kessel aus V4A-Stahl mit Rührer, Stickstoffeinleitung und Destillationsaufsatz wurden die folgenden Substanzen eingefüllt:

31,2 Mol ≙ 4,309 g p-Hydroxybenzoesäure,
14,4 Mol ≙ 2,391 g Isophthalsäure,
 2,4 Mol ≙ 399 g Terephthalsäure,
14,4 Mol ≙ 1,596 g Hydrochinon,
 2,4 Mol ≙ 447 g 4,4'-Dihydroxydiphenyl,
76,8 Mol ≙ 7,841 g Acetanhydrid,
5 g Magnesiumacetat und
2 g Germaniumdioxid.

Nach dreimaligem Evakuieren und anschliessendem Belüften mit Stickstoff wurde der Kessel auf 170 °C aufgeheizt. Dabei wurde Stickstoff mit einer Durchflussgeschwindigkeit von 20 l/h übergeleitet. Nach 2,5 Stunden bei 170 °C wurde die Temperatur innerhalb von 30 Minuten auf 200 °C anschliessend innerhalb von 1,5 Stunden auf 250 °C, dann innerhalb von 1,5 Studen weiter auf 300 °C erhöht. Bei 300 °C wurde zunächst ca. 1 Stunde bei Normaldruck gehalten und dann der Druck im Verlauf von 1,5 Studen bis auf 20 mbar erniedrigt. Der Kessel wurde mit Stickstoff belüftet, das Produkt durch ein Bodenventil herausgedrückt und granuliert.

Tabelle 4

| Beispiel | Vicat B (°C) | $a_n/a_k$ (kJ/m$^2$) | Biegefestigkeit (MPa) | Biege-E-Modul (MPa) | Viskosität (Pa . s)[xx] |
|---|---|---|---|---|---|
| Vergleich 1 | 140 | 8/6 | 150 | 6.500 | 800/300 °C |
| Bsp. 6 | 143 | 48×/42× | 194 | 10.300 | 700/290 °C |
| 7 | 133 | 43×/30× | 179 | 8.900 | 500/280 °C |
| 8 | 135 | 58×/37× | 188 | 10.100 | 200/320 °C |
| 9 | 138 | 46×/42× | 195 | 10.600 | 250/320 °C |
| 10 | 144 | 32×/42× | 197 | 12.300 | 190/320 °C |
| 11 | 141 | 55×/44× | 192 | 10.900 | 280/320 °C |
| 12 | 128 | 65×/38× | 195 | 10.300 | 300/300 °C |
| 13 | 147 | 35×/26× | 188 | 11.200 | 290/320 °C |

x = angebrochen
xx = Schmelzviskosität bei einer Schergeschwindigkeit von $10^3$ sec$^{-1}$ bei der jeweils angegebenen Temperatur

Das so isolierte hell-beige Produkt wurde im Vakuum (ca.1 mbar) bei 240 °C in fester Phase nachkondensiert (24 Stunden).

Die inhärente Viskosität des Polyesters betrug 1,4 dl/g. Im Bereich von 310 °C bis 400 °C bildete das Produkt eine optisch anisotrope Schmelzphase.

Zur Prüfung der mechanischen Eingenschaften wurden aus dem Polyester durch Spritzguss Biege- und Zugstäbe hergestellt. Folgende Werte wurden gemessen :

$a_n$ : 76* kJ/m$^2$  $a_k$ = 48* kJ/m$^2$
Biegefestigkeit : 222 MPa
Biege-E-Modul : 11.100 MPa
Zugfestigkeit : 188 MPa
Zug-E-Modul : 23.800 MPa
Vicat B-Temperatur : 140 °C
* = angebrochen

## Patentansprüche

1. Thermotrope voll-aromatische Polyester auf Basis von
   (a) (gegebenenfalls substituierter) p-Hydroxybenzoesäure,
   (b) Iso- und gegebenenfalls Terephthalsäure,
   (c) Hydrochinon und
   (d) 3,4'- und/oder 4,4'-Dihydroxydiphenyl, 3,4'- und/oder 4,4'-Dihydroxydiphenylether und/oder 3,4'- und/oder 4,4'-Dihydroxydiphenylsulfid,
   wobei das Molverhältnis der einkondensierten Reste a/b 70 : 30 bis 55 : 45, das Molverhältnis der einkondensierten Reste b/c/d 30 : 22 : 8 bis 45 : 41 : 4, das Molverhältnis der einkondensierten Reste b/(c + d) = 0,95 bis 1,05 und der Terephthalsäureanteil der Komponente (b) bis zu 50 Mol-%, bezogen auf (b), betragen.

2. Polyester nach Anspruch 1, dadurch gekennzeichnet, dass das Molverhältnis der einkondensierten Reste a/b 65 : 35 bis 60 : 40 und das Molverhältnis der einkondensierten Reste b/c/d 35 : 29 : 6 bis 40 : 35 : 5 betragen.

3. Polyester nach Ansprüchen 1 und 2, dadurch gekennzeichnet, dass der Terephthalsäureanteil der Komponente (b) 1 bis 40 Mol-%, bezogen auf (b), beträgt.

4. Polyester nach Ansprüchen 1 bis 3, dadurch gekennzeichnet, dass der Terephthalsäureanteil der Komponente (b) 10 bis 30 Mol-%, bezogen auf (b), beträgt.

5. Verfahren zur Herstellung der Polyester nach Ansprüchen 1 bis 4 durch Umsetzung der reaktionsfähigen Derivate der Komponenten (a) bis (d), die auch in situ hergestellt werden können, gegebenenfalls in Gegenwart von Kettenabbrechern, Verzweigungsmitteln und Katalysatoren, bei Temperaturen von 160 bis 370 °C, gegebenenfalls unter vermindertem druck.

6. Verfahren nach Anspruch 5, dadurch gekennzeichnet, dass sich eine Festphasennachkondensation anschliesst.

7. Verwendung der Polyester nach Ansprüchen 1 bis 4 zur Herstellung von Formkörpern, Filamenten, Fasern und Filmen.

## Claims

1. Thermotropic fully aromatic polyesters based on
   (a) (optionally substituted) p-hydroxybenzoic acid,
   (b) iso- and optionally terephthalic acid,
   (c) hydroquinone and
   (d) 3,4'- and/or 4,4'-dihydroxydiphenyl, 3,4'- and/or 4,4'-dihydroxydiphenyl ether and/or 3,4'- and/or 4,4'-dihydroxydiphenyl sulfide,
   the molar ratio of the condensed radicals a/b being 70 : 30 to 55 : 45, the molar ratio of the condensed radicals b/c/d being 30 : 22 : 8 to 45 : 41 : 4, the molar ratio of the condensed radicals b/(c + d) being 0.95 to 1.05 and the therephtalic acid portion of component (b) being up to 50 ml-%, based on (b).

2. Polyesters as claimed in claim 1, characterized in that the molar ratio of the condensed radicals a/b is 65 : 35 to 60 : 40 and the molar ratio od the condensed radicals b/c/d is 35 : 29 : 6 to 40 : 35 : 5.

3. Polyesters as claimed in claims 1 and 2, characterized in that the terephthalic acid portion of component (b) is 1 to 40 mol-%, based on (b).

4. Polyesters as claimed in claims 1 to 3, characterized in that the terephthalic acid portion of component (b) is 10 to 30 mol-%, based on (b).

5. A process for the production of the polyesters claimed in claims 1 to 4 by reaction of the reactive derivatives of components (a) to (d), which may even be prepared in situ, optionally in the presence of chain terminators, branching agents and catalysts, at temperatures in the range from 160 to 370 °C, optionally under reduced pressure.

6. A process as claimed in claim 5, characterized in that it is followed by post-condensation in the solid phase.

7. The use of the polyesters claimed in claims 1 to 4 for the production of mouldings, filaments, fibers and films.

**Revendications**

1. Polyesters thermotropes entièrement aromatiques à base
   (a) d'acides p-hydroxybenzoïques (éventuellement substitués)
   (b) d'acide isophtalique et, le cas échéant, d'acide téréphtalique,
   (c) d'hydroqinone et
   (d) de 3,4'- et/ou de 4,4'-dihydroxydiphényle, d'éther de 3,4'- et/ou de 4,4'-dihydroxydiphényle et/ou de sulfure de 3,4'- et/ou de 4,4'-dihydroxydiphényle, le rapport molaire des restes a/b introduits par condensation ayant une valeur de 70 : 30 à 55 : 45, la proportion molaire des restes b/c/d incorporés par condensation ayant une valeur de 30 : 22 : 8 à 45 : 41 : 4, le rapport molaire des restes b/(c+ d) incorporés par condensation ayant une valeur de 0,95 à 1,05 et la proportion d'acide téréphtalique du composant (b) s'élevant jusqu'à 50 moles % par rapport à (b).

2. Polyester suivant la revendication 1, caractérisé en ce que le rapport molaire des restes a/b incorporés par condensation va de 65 : 35 à 60 : 40 et la proportion molaire des restes b/c/d incorporés par condensation va de 35 : 29 : 6 à 40 : 35 : 5.

3. Polyester suivant les revendications 1 et 2, caractérisé en ce que la proportion d'acide téréphtalique du composant (b) s'élève à 1-40 moles % par rapport à (b).

4. Polyester suivant les revendications 1 à 3, caractérisé en ce que la proportion d'acide téréphtalique du composant (b) s'élève à 10-30 moles % par rapport à (b).

5. Procédé de production des polyesters suivant les revendications 1 à 4 par réaction des dérivés réactifs des composants (a) à (d) qui peuvent être produits également in situ, éventuellement en présence d'agents de terminaison de chaîne, d'agents de ramification et de catalyseurs, à des températures de 160 à 370 °C, le cas échéant sous pression réduite.

6. Procédé suivant la revendication 5, caractérisé en ce qu'on effectue ensuite une post-condensation en phase solide.

7. Utilisation des polyesters suivant les revendications 1 à 4 pour la production de pièces moulées de filaments, de fibres et de films.